(19) Europäisches Patentamt
European Patent Office
Office européen des brevets

(11) **EP 2 796 187 B1**

(12) **EUROPEAN PATENT SPECIFICATION**

(45) Date of publication and mention
of the grant of the patent:
**02.06.2021 Bulletin 2021/22**

(21) Application number: **12858729.2**

(22) Date of filing: **14.02.2012**

(51) Int Cl.:
*B01D 71/26* (2006.01)    *H01M 2/16* (2006.01)
*C08J 9/00* (2006.01)    *B01D 67/00* (2006.01)
*C08J 9/28* (2006.01)    *H01M 10/0525* (2010.01)
*H01M 2/14* (2006.01)

(86) International application number:
**PCT/CN2012/071137**

(87) International publication number:
**WO 2013/091297 (27.06.2013 Gazette 2013/26)**

(54) **MICROPOROUS MEMBRANE OF POLYETHYLENE-BASED COMPOSITE MATERIAL WITH ADHESION UNDER HOT PRESSING**

MIKROPORÖSE MEMBRAN AUS POLYETHYLENBASIERTEM VERBUNDWERKSTOFF MIT ADHÄSION UNTER HEISSPRESSEN

MEMBRANE MICROPOREUSE DE MATIÈRE COMPOSITE À BASE DE POLYÉTHYLÈNE AYANT UNE ADHÉSION SOUS PRESSAGE À CHAUD

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2011 CN 201110445886**

(43) Date of publication of application:
**29.10.2014 Bulletin 2014/44**

(73) Proprietor: **Tianjin DG Membrane Co., Ltd.**
**Tianjin 301802 (CN)**

(72) Inventors:
• **LI, Xin**
**Tianjin 301802 (CN)**
• **LI, Jianhua**
**Tianjin 301802 (CN)**
• **JIAO, Yongjun**
**Tianjin 301802 (CN)**
• **LI, Long**
**Tianjin 301802 (CN)**
• **CHEN, Wei**
**Tianjin 301802 (CN)**
• **DENG, Xinjian**
**Tianjin 301802 (CN)**

(74) Representative: **Lang, Christian**
**LangPatent Anwaltskanzlei IP Law Firm**
**Ingolstädter Straße 5**
**80807 München (DE)**

(56) References cited:
**CN-A- 1 758 463**    **CN-A- 1 978 037**
**CN-A- 1 978 037**    **JP-A- 2007 160 694**
**US-A- 4 197 148**    **US-A- 4 778 601**
**US-A1- 2010 166 961**

**Description**

The invention relates to a polyolefin micro porous membrane and a preparation method thereof, and more particularly to a microporous membrane of polyethylene-based composite material for lithium ion batteries. The membrane has the thermal bonding capability by controlling the amorphous content therein, and is suitable for use in lithium ion batteries or storage batteries having high safety and long cycle life.

Polyolefin microporous membrane has nanosized micropores in the form of a penetrable three dimensional network and features high voltage oxidation resistance and stability in the presence of organic electrolytes in lithium ion batteries. As a membrane material, the polyolefin microporous membrane has been widely applied in lithium ion batteries in cell phones and notebook computers. Typical commercial polyolefin microporous membranes include: a three-layer of PP/PE/PP composite membrane prepared by a dry method, a single layer of PE membrane having a large molecule weight prepared by a wet method, and a microporous physical gel membrane prepared by a solvent-induced phase separation method. A typical microporous physical gel membrane is a polyvinylidenefluoride-hexafluoro propylene (PVDF-HFP) copolymer microporous physical gel membrane prepared by Bellcore process. Because such a membrane has a low intensity and a lamination process is generally employed to bond the membrane with the electrode pieces through hot pressing to form an integrative electrodes group, the PVDF-HFP copolymer microporous physical gel is capable of swelling after absorbing the electrolyte, and has certain elasticity, and enhances the liquid retention capability of the electrode pieces, and improves the cycle life, safety, and consistency of the battery. However, the micropores of the PVDF-HFP gel membrane have slightly large pore size, approximately between 0.5 and 2 $\mu$m; and the membrane is not strengthened by hot stretching, thus, the mechanical strength of the membrane is low and is not applicable to process requirements like battery winding.

The existing polyolefin microporous membrane is unable to satisfy the high requirements of power batteries and consumer electronics either on the cycle life or the safety. Primary technologies are analyzed as follows: the three-layer of PP/PE/PP composite membrane prepared by the wet method has the following shortages:

1. The strength and toughness of the membrane are not good. The membrane is prone to be torn in a transverse direction, and the transverse elongation at break is smaller than 20%.

2. Although the middle microporous layer employs PE that has the shutdown ability at a high temperature of between 135 and 145°C, the fusion point thereof is limited and drawbacks of large thermal shrinkage and insufficient high temperature rupture resistance still exist in the hot stretched PP microporous layers at the temperature of 130°C.

3. Compared with the PVDF-HFP physical gel membrane or the coated membrane, the membrane prepared by the dry method has low bonding capability with the electrode pieces during the hot press.

To improve the transverse rupture resistance of the PP/PE/PP membrane prepared by the dry method, Chinese patent publication number CN 02152444.0 disclosed a method including blending less than 10 wt. % of thermoplastic polyolefin elastomers, i. e., Ethylene-propylene methylene copolymer (EPM), and Ethylene-Propylene-Diene Monomer (EPDM), into a polyolefin matrix, and stretching a resulting mixture to produce pores. However, the nature and the toughness of the thermoplastic polyolefin elastomers determine the formation and distribution of crazes in the polyolefin matrix during the cold stretching, that is, the capability of pores-formation by stretch of the polyolefin matrix using the dry method is affected, and the proper porosity cannot be obtained. Thus, the proportion of the blended thermoplastic polyolefin elastomers is required to be smaller than 10 wt. %. The increase of the mechanical property is very limited, and the practicality of the membrane is not enough.

Another process is the wet method, also called thermally induced phase separation, in which, polyolefin resin of large molecular weight and a high temperature compatilizer are used as main raw materials. The high temperature compatilizer generally adopts an alkane liquid having a high boiling point, such as paraffin oil. The compatilizer and the polyolefin resin are dissolved with each other in terms of thermodynamics at a high temperature and blended at the molecular level, and phase separation occurs at a low temperature. The high temperature compatilizer is actually a solvent for pore production, the heated and evenly blended high temperature melt is quickly solidified on the surface of a cold roller, and the phase separation occurs in the process of the temperature decrease. A resulting lamina is stretched and strengthened using fractional-step biaxial stretch or synchronous biaxial stretch. The high temperature compatilizer is extracted from a semi-finished membrane using a volatile cleaning solvent, and a microporous membrane having nanosized pores communicating with each other is obtained after hot stretching, heat-shaping, and cooling. The method is generally used to prepare the single layer of PE membrane. Compared with membranes prepared by the dry method, the membrane prepared by the wet method has improved transverse tensile strength and elongation percent of the transverse rupture because that the wet method adopts the biaxial stretching and that the weight average molecular weight of the raw material is generally above 500 thousand Da. The existing PE membrane prepared by the wet method has the following disadvantages:

1. During the preparation, the polyethylene powder having a large molecular weight and a high density is mixed with the high temperature compatilizer, i. e., the liquid paraffin oil, heated and blended. However, the fluctuation exists in the solid content of the slurry, the stability of the feeding and the consistency in the melt content are not good. The stability and the consistency of the product are affected.

2. Because the hot stretching strengthening process is employed, the thermal shrinkage is slightly large at the high temperature of 120°C above, and the safety of the battery cannot be ensured.

3. Compared with the PVDF-HFP physical gel membrane or the coated membrane, the PE membrane prepared by the wet method is also lack of the bonding capability with the electrode pieces, the elasticity in the thickness direction, or the stress absorption capability. The PE membrane prepared by the wet method cannot meet the demands of the power battery on aspects of the safety and the cycle life.

CN 1978037 A discloses a method of producing a polyolefin microporous membrane. The method includes: melt-kneading a mixture of polyolefins and a first solvent, extruding the mixture through a twin-screw extruder, cooling to obtain a gel plate or film, hot stretching the plate or film, removing the first solvent through supercritical extraction method, and drying to obtain the polyolefin microporous membrane.

US 2010/166961 A1 discloses a method of producing a microporous polymer film. The method includes: (a) forming a layer of a polymer solution on a substrate, wherein the polymer solution contains two miscible liquids and a polymer material dissolved therein, the two miscible liquids contain a principal liquid having an interfacial tension of at least 5% lower than that of the polymer and a second liquid having an interfacial tension of at least 5% greater than that of the polymer; (b) producing a film of gelled polymer from the polymer solution; and (c) rapidly removing the principal liquid and the second liquid from the film of the gelled polymer by unidirectional mass transfer to produce the polymer film.

US 4,778,601 A discloses a method of producing microporous membrane through: forming a mixture comprising ultrahigh molecular weight polyethylene (UHMW-PE) and a porogen; heating the mixture to produce a solution of UHMW-PE and the porogen; extruding the solution through a forming die to obtain a membrane; cooling the membrane to cause phase separation and resulting in a polymer-rich, porogen-poor phase and a polymer-poor, porogen-rich phase; creating a microporous structure in the membrane by removing progen from the membrane; and drying the microporous membrane.

US 4,197,148 A discloses a process of preparing permeable membranes. The process includes: mixing in the molten state two different kinds of thermoplastic synthetic resins which are partly compatible with each other, shaping the molten mixture into a sheet- or film-like melt, passing the melt through a heated zone, cooling and solidifying, treating the resulting film or sheet with a solvent which is a good solvent for one of the component resins but is a poor solvent for the other, so as to dissolve and to remove the soluble resin, and drying the product.

In market application of related power battery that has relatively high requirements, the following characteristics of the membrane are demanded:

1. The thickness is uniform, the diameter of the pore is nanosized, the internal resistance is small, and the porosity is adequate and uniformly distributed.

2. On the mechanical aspect, the membrane is required to possess high tensile strength, high toughness in the transverse direction, press resistance and puncture resistance in the thickness direction to prevent the physical short circuit.

3. When heat is unexpectedly generated inside the battery and the temperature increases between 130 and 200°C, the membrane has the fusion shutdown property, small thermal shrinkage, high temperature rupture resistance, and mechanical integrity even in the fusion state.

4. The membrane has excellent compression elasticity in the thickness direction. In another word, the membrane has proper elastic deformation capacity to adapt to the expansion need of the negative electrode when a press is exerted in the thickness direction, thereby preventing the electrode pieces from deformation and wrinkling in condition of an uneven stress. Conditions are avoided during the stress deformation that the porosity of the membrane is decreased by a large degree, the micropores are closed, the internal resistance is too high, and the common discharge of the battery is affected. After releasing the stress, the membrane has the elastic recovery capability, thereby ensuring the uniform and tight contact among the positive electrode piece, the membrane, and the negative electrode piece and avoiding local lean solution.

To improve the high temperature shrinkage resistance and the high temperature rupture resistance of the polyolefin microporous membrane, Chinese patent application number 200480034190.3 has disclosed a technical solution including coating a gelable fluororesin coating layer on a surface of the polyolefin microporous membrane, however, disadvantages of the technical solution are as follows:

1. Because the polyolefin membrane basically belongs to the inert material, the bonding force of the polyolefin membrane to the coating layer is not enough, too thick the coating results in easy exfoliation, and too thin the coating layer inhibits the thermal shrinkage function of the polyolefin membrane.

2. Capillary action occurs in the micropores of the polyolefin membrane after corona treatment. In conducting the above coating layer technical solution, the gel in the slurry easily enters the micropores of the polyolefin membrane, which may affect the pore size distribution of air permeability of the membrane after solvent evaporation, desiccation, and formation of the membrane. The consistency of the membranes produced in batches using the coating method is difficult to control, and the production costs of the composite membrane prepared by the above method are high.

To improve the bonding strength of the membrane to the positive electrode piece and to improve the safety in overcharge resistance of the lithium ion battery, Chinese patent publication number CN 01112218.8 has disclosed a method including blending a monomer polymer that is able to form a gel by thermal crosslinking into an electrolyte for the purpose of improving the bonding strength of the membrane to the positive electrode piece. However, during the thermal crosslinking of the gel, gel also forms in the micropores of the membrane, thereby affecting the permeability of the membrane. Furthermore, the monomer not totally reacted may be oxidized at the positive electrode side and produce gas, or even affect the cycle performance of the battery.

Enlightened by the commercial adhesive membrane materials, such as the stretch film, the polyisobutylene tackifying resin is used to modify PP and PE to obtain non-porous membrane having bonding capability for package. On the basis of the disadvantages analysis, the preparation process, and the recipe analysis of the polyolefin membrane used in the lithium ion battery, in view of the relation between the safety and service life of the battery and the membrane material, and for the purpose of improving the drawbacks of the existing single layer and multi-layer membrane, inventors have made creative improvements on the raw materials, the preparation process, and the product structure of the membrane to obtain a polyolefin microporous membrane that possess the above characteristics and that is capable of improving the safety and the cycle performance of the lithium ion battery, and solving problems in the prior art. The summary of the invention are proposed hereinbelow.

To achieve the above objective, in accordance with one embodiment of the invention, there is provided a microporous membrane of a polyethylene-based composite material, comprising crystalline high density polyethylene as a base material. The polyethylene has a latent heat of fusion of between 200 and 250 J/g, and a weight average molecular weight of between 500,000 and 5,000,000 Da. The polyethylene is modified by 10-25 wt. % of a modifying agent comprising a rubber selected from polyisobutylene (PIB), ethylene-propylene methylene copolymer (EPM), or a mixture thereof, the rubber having a dynamic viscosity of between 50 and 2000 Pa·s at 100°C and a weight average molecular weight of between 90,000 and 250,000 Da; micropores on two sides of the membrane is asymmetric, micropores on one side are smaller than size than micropores on the other side; the microporous membrane is adapted to be hot pressed with a positive pole piece at a temperature of 110-120°C and a pressure of 1-2.5 MPa for 1-15 min to form a bonding body having a peel strength of exceeding 0.03 N/20 mm and a thermal contraction of less than 10% at 130°C within 30 min.

Conventional PE microporous membrane prepared by wet method with paraffin oil as compatilizer has an average pore size of less than 70 nm, and cannot be bonded with pole pieces by thermal pressing. If extraordinarily high temperature is employed to thermally press the membrane, the pore size of the resulting membrane becomes smaller, thereby resulting in high internal resistance of batteries, which is unacceptable. The membrane of a polyethylene-based composite material of the invention has asymmetric micropores on two sides and relatively large average pore size, which is prepared based on the principle of liquid-liquid phase separation of thermally induced phase separation. The high temperature compatilizer is an aliphatic dibasic acid ester having a flash point of exceeding 210°C and being selected from dioctyl sebacate (DOS), dioctyl azelate (DOZ), diisodecyl adipate (DIDA), or a mixture thereof, rather than paraffin oil. The aliphatic dibasic acid ester is thermodynamically compatible with polyethylene at 180-210°C. The employment of the aliphatic dibasic acid ester having a flash point of exceeding 210°C can effectively prevent the formation of big pore size and bubbles in the high temperature melt, thereby ensuring the production safety. The aliphatic dibasic acid ester is also thermodynamically compatible with polyisobutylene (PIB) and ethylene-propylene methylene copolymer at 90-120°C, which can be kneaded at high temperature to yield a uniform hot melt adhesive. The hot melt adhesive, the high molecular weight polyethylene powder, and the high temperature liquid compatilizer are dispersed at 90-120°C to yield liquid-solid two phase flow slurry having a certain viscosity and difficulty for settlement, which is conducive to feeding the materials to the extruder stably and uniformly.

Apart from employing the aliphatic dibasic acid ester as the high temperature compatilizer, two sides of the melt are cooled by asymmetric cooling for the phase separation. Conventional membrane casting employs a single mirror cooling roll. In this invention, the melt is extruded and cooled on the surface of chill rolls using asymmetrical cooling process to yield casting pieces having different cooling temperature. Specifically, the winding length of one surface of the melt on a secondary chill roll is controlled to be smaller than that of the other surface of the melt on a main chill roll, or the temperature and flow rate of the cooling medium in the main and secondary chill rollers are controlled to be different. Thus, the micropores on two sides of the membrane are asymmetric, the micropores on one side are fine and compact, and the micropores on the other side are dendroid gross pores. Preferably, the average pore size of the membrane is 80-300 nm, the porosity of 40-75%, particularly 50-65%, the initial Gurley value of between 30 s/100 cc and 400 s/100 cc. After being hot pressed with a pressure of 1-2.5 MPa at a temperature of 110-120°C, the microporous membrane still has low resistance.

High density polyethylene has a relatively high crystallinity and thus tends to form a microfiber organization upon thermal stretching. Thus, PE membrane has much higher tensile strength in contrast to PVDF-HFP gel membrane. The latent heat of fusion of PE microporous membrane prepared by wet method is generally more than 220 J/g. In the invention, the latent heat of fusion of the microporous membrane is between 150 and 195 J/g. The melting point of the membrane is between 130 and 145°C, the thickness is between 20 and 50 $\mu$m, particularly between 25 and 35 $\mu$m. The porosity is preferably between 50 and 65%, which ensures the internal resistance of the battery is still low even by the treatment of thermal pressing. The content of amorphous rubber in the membrane is controlled between 10 and 25%, which takes into account both the thermal bonding ability and the tensile strength of the membrane. If the rubber percentage is too low, the thermal bonding ability is poor. If the rubber percentage is too high, the mechanical strength of the membrane is significantly reduced. The polyethylene as the base material is a high molecular weight of polyethylene or ultra-high molecular weight of polyethylene having a high density, a latent heat of fusion of between 200-250 J/g, and a weight average molecular weight of between 500,000 and 5,000,000 Da, particularly between 1,000,000 and 3,000,000 Da, which is thermally stretched at 105-128°C by 4-7 folds along mechanical direction and by 2-6 folds along transverse direction, a longitudinal tensile strength is controlled to exceed 70 MPa, and a transversal elongation at break to exceed 100%. Thus, a membrane having high safety, strong squeezing, needling, short circuit resistance is obtained.

A method for preparing a microporous membrane of a polyethylene-based composite material using a thermally induced phase separation technology, the membrane comprising crystalline high density polyethylene as a base material, the polyethylene has a latent heat of fusion of between 200 and 250 J/g, and a weight average molecular weight of between 500,000 and 5,000,000 Da; wherein the method comprising the following steps:

1) uniformly milling a rubber and a high temperature compatilizer at 90-120°C to yield a hot melt adhesive A; wherein the rubber is polyisobutylene (PIB), ethylene-propylene methylene copolymer (EPM), or a mixture thereof, and has a dynamic viscosity of between 50 and 20000 Pa·s at 100°C and a weight average molecular weight of between 90,000 and 250,000 Da, and the high temperature compatilizer is an aliphatic dibasic acid ester having a flash point of exceeding 210°C, and is selected from dioctyl sebacate (DOS), dioctyl azelate (DOZ), diisodecyl adipate (DIDA), or a mixture thereof;

2) swelling and stirring polyethylene and the high temperature compatilizer at 90-120°C for 1-24 hr to yield a slurry B;

3) uniformly mixing the hot melt adhesive A and the slurry B at 90-120°C, quantitatively feeding a resulting mixture to a twin screw extruder via a metering pump, milling at 180-210°C to yield a thermodynamically uniform solution, and extruding the uniform solution to yield casting pieces;

4) quickly cooling the casting pieces on chill rolls using an asymmetric cooling process, controlling a winding length of one surface of the casting pieces on a secondary chill roll to be smaller than that of the other surface of the casting pieces on a main chill roll, or controlling temperatures and flow rates of a cooling medium in the main and secondary chill rollers to be different;

5) preheating the cooled casting pieces at 105-128°C and thermally stretching the casting pieces in two directions to form a membrane, a longitudinal stretching ratio being 4-7 folds, and a transverse stretching ratio being 2-6 folds;

6) extracting and removing the high temperature compatilizer using a second solvent; and

7) thermally stretching the membrane for the adjustment of porosity, pore size, and thickness thereof, thermally shaping, and cooling to yield the microporous membrane of a polyethylene-based composite material.

The disclosure further provides a lithium ion battery, comprising a positive pole piece, a negative pole piece, an electrolyte, and the microporous membrane of a polyethylene-based composite material of the invention, wherein the microporous membrane is adapted to be hot pressed with the positive pole piece and the negative pole piece at a temperature of between 110 and 120°C and at a pressure of between 1 and 2.5 MPa for between 1 and 15 min to form a bonding body having a peel strength of exceeding 0.03 N/20 mm and a thermal shrinkage rate of less than 10% at 130°C within 30 min. The thermally pressed membrane and the bump particles on the surface of the pole pieces form a mechanical embedment effect thereby preventing the thermal contraction of the membrane at 130°C or even above and improving the safety. Compared with PE membrane prepared by wet method and PP/PE/PP membrane prepared by dry method, the microporous membrane of a polyethylene-based composite material has characteristics of thermo-compression bonding, just like the PVDF-HFP copolymer gel membrane, and solves the defect of thermal contraction of the thermally stretched polyolefin membrane. The amorphous rubber in the microporous membrane of a polyethylene-based composite material has capacity of absorption and swelling, which is conducive to the uniformity and cycle life of the battery.

Compared with the prior art, advantages of the invention are summarized as follows. The rubber is selected from polyisobutylene (PIB), ethylene-propylene methylene copolymer (EPM), or a mixture thereof, and has a dynamic viscosity of between 50 and 2000 Pa·s at 100°C and a weight average molecular weight of between 90,000 and 250,000 Da, which meets the requirement for the preparation of the hot melt adhesive. If the molecular weight is too small or the dynamic viscosity is too low, the liquid-solid two-phase flow resulting from the mixture of the rubber and polyethylene powder is unstable, the power tends to precipitate, which adversely affects the uniformity of the membrane. Furthermore, too small molecular weight of the rubber is easy to be extracted with the high temperature compatilizer. Small molecular weight, low viscosity, or too much of the rubber each will result in the formation of closed pores when thermally stretching the polyethylene-based membrane at 105-128°C. If the rubber employs high molecular weight and high viscosity materials, the production process of the hot melt adhesive at 90-120°C is very difficult to control. If the high molecular weight and high viscosity rubber is employed to modify the membrane, the thermal press temperature is required to be 128°C or above, which is apt to break the polyethylene-based melt, adversely affect the thermal lamination of the microporous membrane and the pole pieces, thereby resulting in insufficient bonding force.

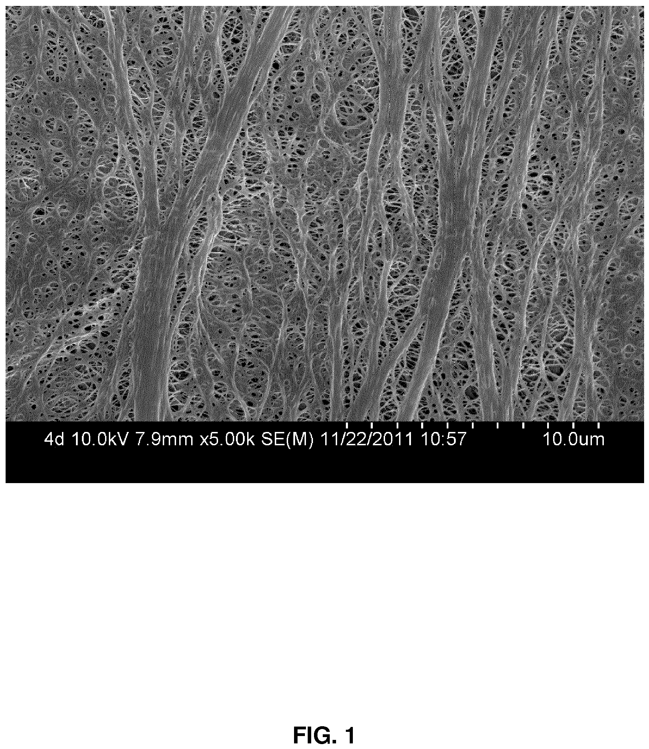

FIG. 1 is a physical appearance of one side of a microporous membrane of a polyethylene-based composite material having fine and small pores; and

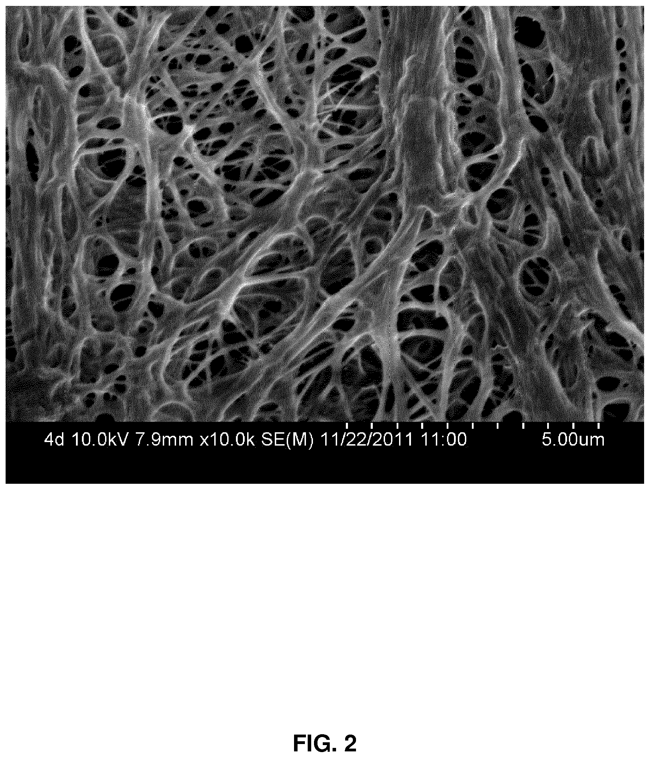

FIG. 2 is a physical appearance of another side of a microporous membrane of a polyethylene-based composite material having dendroid gross pores.

For further illustrating the invention, experiments detailing a microporous membrane of a polyethylene-based composite material and a preparation method thereof are described hereinbelow combined with the drawings. It should be noted that the following examples are intended to describe and not to limit the invention.

Evaluation of parameters of membrane

1) Membrane thickness ($\mu$m)

Precision Thickness Gauge CHY-C2 manufactured by Labthink Instruments Co., Ltd. is employed. The thickness of five randomly selected points on a sample (50 mm × 50 mm) cut from the membrane is measured using the precision thickness gauge, and the average is recorded.

2) Degree of aeration

The measurement on the degree of aeration of the membrane is carried out according to the standard JIS P8117.

3) Tensile strength and elongation at break

Based on the standard GB/T 1040. 1-2006, a strip membrane sample having a width of 25 mm is measured using electronic test equipment CMT4000 manufactured by MTS company.

4) Average pore size

Based on the standard IS015901. 1-2006 and under a pressure of 20-2000 Psi, a mercury porosimeter is employed to measure the pore distribution and the average pore size of the membrane.

5) Porosity

The pseudo-liquid density of the membrane (g/cm$^3$) = membrane weight/(thickness × area), the calculation result is divided by the theoretical value 0.93 g/cm$^3$, and 1 minus the obtained quotient represents the porosity of the membrane.

6) Thermal shutdown temperature, thermal contraction, and high temperature resistance test

The membrane is thermally pressed with a positive pole piece and then the two are clamped between smooth stainless steel plates. 0.35 MPa of static compressive stress is exerted along the thickness direction. The membrane is heated from 90 to 150°C with a heating rate of 1°C/min. The membrane is maintained at 150°C for 5 min and then cooled to room temperature. Thereafter, the Gurley value is measured, if exceeding 2000 s/100 cc, the thermal shutdown temperature of the membrane is considered to be less than 150°C. The membrane is heated from 90 to 150°C with a heating rate of 1°C/min. The membrane is maintained at 150°C for 5 min and then cooled to room temperature. Thereafter, the Gurley value is measured, and the physical appearance of the cooled membrane is observed intact. The longitudinal and transverse length of the membrane after thermal contraction is measured.

Thermal contraction = (Initial length – length after thermal contraction)/Initial length × 100%.

7) Peel strength

The bonding strength of the bonding body of the membrane and the positive pole piece is measured by a pulling test at 180°.

Example 1

Formulas of the microporous membrane of a polyethylene-based composite material

20 parts by weight of ultrahigh molecular weight polyethylene (UHMWPE) having a weight average molecular weight of 1,500,000 Da; 4 parts by weight of polyisobutylene (PIB) having a weight average molecular weight of 120,000 Da and Brookfield dynamic viscosity of 150 Pa·s at 100°C; 80 parts by weight of dioctyl sebacate; and 0.5 part by weight of the antioxidant 1010.

Method for preparation of the microporous membrane

1) Compounding and piece casting: 4 parts by weight of polyisobutylene (PIB) and 20 parts by weight of dioctyl sebacate were kneaded at 120°C by a kneading machine for 2 hr to yield a hot melt adhesive A. 20 parts by weight of ultrahigh molecular weight polyethylene and 60 parts by weight of dioctyl sebacate were swelled and mixed at 105°C in a vacuum stirring tank for 12 hr to yield a slurry B. The hot melt adhesive A and the slurry B were dispersed at 105°C in the vacuum stirring tank for 5 hr. Thereafter, the resulting mixture was fed into a parallel co-rotating twin-screw extruder (CRTSE) having a length/diameter ratio of 1: 52 via a metering pump for melting and milling. The temperature of the extruder was controlled in the range of 175-210°C. The melt was extruded from a flat die to produce casting pieces which were cooled quickly using three-roll cooling process. The first roller was a cooling compression roller, the second roller was a secondary cooling roller, and the third roller was a main cooling roller. The melt was introduced at zero angle between the first and the second rollers. One side of the melt was cooled by the second roller with an angle of contact of 90°, and the other side of the melt was cooled by the third roller with an angle of contact of 180°. The resulting casting pieces had a thickness of 1.5 mm.

2) Synchronous bi-directional hot stretch: the casting pieces were preheated at a temperature of between 115 and 125°C and stretched in two directions, the longitudinal stretching ratio was 5 folds, and the transverse stretching ratio was 3 folds.

3) Liquid phase extraction under high pressure: the rolled products were washed in an extraction kettle. The washing temperature was 55°C, the washing pressure was 4.0 MPa, the separation pressure was 1.5-1.8 MPa, the separation temperature was 65°C, and the extraction solvent was R125. The washing was carried out cyclically in the system.

4) Thermal stretching step by step: the obtained semi-products of the membrane were preheated at a temperature of between 115 and 125°C and stretched in two directions, the longitudinal stretching ratio was 1.3 folds, and the transverse stretching ratio was 1.5 folds; and the stretching temperature was 125°C.

5) Thermal shaping: the transversely stretched membrane was maintained for 20-40 seconds at 120-128°C.

6) Cooling and winding: the thermally shaped membrane was cooled to 40°C and wound to yield the microporous membrane of a polyethylene-based composite material.

The characteristics of the membrane are summarized as follows:

Thickness: 30 μm; average pore size: 160 nm; porosity: 55%; Gurley value: 95 s/100 cc; tensile strength: machine direction (MD), 118 MPa, transverse direction (TD), 75 MPa; longitudinal elongation at break: 55%; transversal elongation at break: 173%; latent heat of fusion under DSC test: 176 J/g; melting point: 138°C. One side of the membrane at the side of the second roller was contacted with a negative pole piece of a battery, and the other side was contacted with a positive pole piece. Before injecting an electrolyte, the pole group of the battery was thermally pressed at 118°C under a pressure of 1 MPa for 10 min. After cooling, the peel strength of the membrane and the positive pole piece was measured to be 0.1 N/20 mm. Thereafter, the thermal contraction of the membrane at 130°C was measured. The physical appearance of the cooled membrane at room temperature was observed intact. The longitudinal and transverse thermal contraction rate of the membrane were both less than 8%. The Gurley value exceeded 2000 s/100 cc.

At the temperature of 80°C, 0.35 MPa of static compressive stress was exerted on the membrane along the through-thickness direction for 5 min. The membrane thickness was 24 μm. Five minutes later after the stress was released, the membrane thickness was measured to be 26 μm, and the Gurley value was 228 s/100 cc.

The membrane was dried and an electrolyte was injected to prepare a lithium ion battery which was tested with hot box, needling, short circuit, and squeezing at 150°C. 1C charge-discharge cycle at 25°C was measured. The safety indexes of the battery were all qualified, and the cycle life was 1250 times.

Comparative Example 1

The battery was prepared as that in Example 1 except that the membrane was a PP/PE/PP membrane prepared by a dry method. The membrane has a thickness: 25 μm; porosity: 40%; Gurley value: 600-630 s/100 cc; tensile strength: machine direction (MD), 165 MPa, transverse direction (TD), 13 MPa; transversal elongation at break: less than or equal to 15%.

1C charge-discharge cycle at 25°C was measured, and the cycle life was 635 times. The safety indexes of needling and short circuit were qualified. After being placed in a hot box at 150°C for 30 min, the battery was fired and exploded upon squeezing.

Comparative Example 2

The battery was prepared as that in Example 1 except that the membrane was a PE membrane prepared by a wet method. The membrane has a thickness: 25 μm; porosity: 49%; Gurley value: 185 s/100 cc; tensile strength: machine direction (MD), 143 MPa, transverse direction (TD), 21 MPa; longitudinal elongation at break: 42%; transversal elongation at break: 344%.

1C charge-discharge cycle at 25°C was measured, and the cycle life was 876 times. The safety index of needling was qualified. And the short circuit and hot box tests at 150°C were disqualified.

**Claims**

1. A microporous membrane of a polyethylene-based composite material, comprising crystalline high density polyethylene as a base material, **characterized in that** the polyethylene has a latent heat of fusion of between 200 and 250 J/g, and a weight average molecular weight of between 500,000 and 5,000,000 Da; the polyethylene is modified by 10-25 wt. % of a modifying agent comprising a rubber selected from polyisobutylene (PIB), ethylene-propylene methylene copolymer (EPM), or a mixture thereof, the rubber having a dynamic viscosity of between 50 and 2000 Pa·s at 100°C and a weight average molecular weight of between 90,000 and 250,000 Da; micropores on two opposite sides of the membrane are asymmetric, micropores on one side are smaller in size than micropores on the other side; the microporous membrane has a latent heat of fusion of between 150-195 J/g, a fusion point of between 133 and 145°C, an average pore size of between 80 and 300 nm, a porosity of between 40 and 75%, an initial Gurley value of between 30 s/100 cc and 400 s/100 cc, a thickness of between 20 and 50 μm, a longitudinal tensile strength of exceeding 70 MPa, and a transversal elongation at break of exceeding 100%.

2. The microporous membrane of claim 1, **characterized in that** the rubber is polyisobutylene (PIB) having a dynamic viscosity of between 150 and 1000 Pa·s at 100°C and a weight average molecular weight of between 120,000 and 200,000 Da.

3. The microporous membrane of claim 1, **characterized in that** the rubber is ethylene-propylene methylene copolymer (EPM) having a dynamic viscosity of between 120 and 900 Pa·s at 100°C and a weight average molecular weight of between 120,000 and 200,000 Da.

**4.** The microporous membrane of claim 1, **characterized in that** the polyethylene has a weight average molecular weight of between 1,000,000 and 3,000,000 Da.

**5.** The microporous membrane of claim 1, **characterized in that** the membrane has a thickness of between 25 and 35 μm, and a porosity of between 50 and 65%.

**6.** A method for preparing a microporous membrane of a polyethylene-based composite material using a thermally induced phase separation technology, the membrane comprising crystalline high density polyethylene as a base material, the polyethylene has a latent heat of fusion of between 200 and 250 J/g, and a weight average molecular weight of between 500,000 and 5,000,000 Da; wherein the method comprising the following steps:

  1) uniformly milling a rubber and a high temperature compatilizer at 90-120°C to yield a hot melt adhesive A, wherein:

   the rubber is polyisobutylene (PIB), ethylene-propylene methylene copolymer (EPM), or a mixture thereof, and has a dynamic viscosity of between 50 and 20000 Pa·s at 100°C and a weight average molecular weight of between 90,000 and 250,000 Da, and
   the high temperature compatilizer is an aliphatic dibasic acid ester having a flash point of exceeding 210°C, and is selected from dioctyl sebacate (DOS), dioctyl azelate (DOZ), diisodecyl adipate (DIDA), or a mixture thereof;

  2) swelling and stirring polyethylene and the high temperature compatilizer at 90-120°C for 1-24 hr to yield a slurry B;
  3) uniformly mixing the hot melt adhesive A and the slurry B at 90-120°C, quantitatively feeding a resulting mixture to a twin screw extruder via a metering pump, milling at 180-210°C to yield a thermodynamically uniform solution, and extruding the uniform solution to yield casting pieces;
  4) quickly cooling the casting pieces on chill rolls using an asymmetric cooling process, controlling a winding length of one surface of the casting pieces on a secondary chill roll to be smaller than that of the other surface of the casting pieces on a main chill roll, or controlling temperatures and flow rates of a cooling medium in the main and secondary chill rollers to be different;
  5) preheating the cooled casting pieces at 105-128°C and thermally stretching the casting pieces in two directions to form a membrane, a longitudinal stretching ratio being 4-7 folds, and a transverse stretching ratio being 2-6 folds;
  6) extracting and removing the high temperature compatilizer using a second solvent; and
  7) thermally stretching the membrane for the adjustment of porosity, pore size, and thickness thereof, thermally shaping, and cooling to yield the microporous membrane of a polyethylene-based composite material.

**7.** A lithium ion battery, comprising a positive pole piece, a negative pole piece, an electrolyte, and a microporous membrane of a polyethylene-based composite material of any one of claims 1-6, **characterized in that,** the microporous membrane is adapted to be hot pressed with the positive pole piece and the negative pole piece at a temperature of between 110 and 120°C and at a pressure of between 1 and 2.5 MPa for between 1 and 15 min to form a bonding body having a peel strength of exceeding 0.03 N/20 mm and a thermal shrinkage rate of less than 10% at 130°C within 30 min.

**Patentansprüche**

**1.** Mikroporöse Membran aus einem polyethylenbasierten Verbundwerkstoff, umfassend kristallines Polyethylen hoher Dichte als Basismaterial, **dadurch gekennzeichnet, dass** das Polyethylen eine latente Schmelzwärme zwischen 200 und 250 J/g und eine gewichtsmittlere Molekülasse von 500.000 bis 5.000.000 Da aufweist; wobei das Polyethylen durch 10 bis 25 Gew.-% eines Modifizierungsmittels modifiziert ist, umfassend einen Kautschuk, der ausgewählt ist aus Polyisobutylen (PIB), Ethylen-Propylen-Methylen-Copolymer (EPM) oder einer Mischung davon, wobei der Kautschuk eine dynamische Viskosität von zwischen 50 und 2.000 Pa s bei 100 °C und eine gewichtsmittlere Molekülmasse von zwischen 90.000 und 250.000 Da aufweist; wobei die Mikroporen auf zwei gegenüberliegenden Seiten der Membran asymmetrisch sind, wobei die Mikroporen auf der einen Seite kleiner sind als Mikroporen auf der anderen Seite; wobei die mikroporöse Membran eine latente Schmelzwärme von zwischen 150 und 195 J/g, einen Schmelzpunkt zwischen 133 und 145 °C, eine durchschnittliche Porengröße zwischen 80 und 300 nm, eine Porosität zwischen 40 und 75 %, einen anfänglichen Gurley-Wert zwischen 30 s/100 cc und 400 s/100 cc, eine Dicke zwischen 20 und 50 μm, eine Längszugfestigkeit von mehr als 70 MPa und eine transversale Bruchdehnung von mehr als 100 % aufweist.

2. Mikroporöse Membran nach Anspruch 1, **dadurch gekennzeichnet, dass** der Kautschuk Polyisobutylen (PIB) ist, der eine dynamische Viskosität zwischen 150 und 1.000 Pa s bei 100 °C und eine gewichtsmittlere Molekülmasse zwischen 120.000 und 200.000 Da aufweist.

3. Mikroporöse Membran nach Anspruch 1, **dadurch gekennzeichnet, dass** der Kautschuk Ethylen-Propylen Methylen-Copolymer (EPM) ist, der eine dynamische Viskosität zwischen 120 und 900 Pa s bei 100 °C und eine gewichtsmittlere Molekülmasse zwischen 120.000 und 200.000 Da aufweist.

4. Mikroporöse Membran nach Anspruch 1, **dadurch gekennzeichnet, dass** das Polyethylen eine gewichtsmittlere Molekülmasse zwischen 1.000.000 und 3.000.000 Da aufweist.

5. Mikroporöse Membran nach Anspruch 1, **dadurch gekennzeichnet, dass** die Membran eine Dicke von zwischen 25 und 35 μm und eine Porosität von zwischen 50 und 65 % aufweist.

6. Verfahren zur Herstellung einer mikroporösen Membran aus einem polyethylenbasierten Verbundwerkstoff unter Verwendung einer thermisch induzierten Phasentrennungstechnologie, wobei die Membran kristallines Polyethylen hoher Dichte als Basismaterial umfasst, das Polyethylen eine latente Schmelzwärme zwischen 200 und 250 J/g und eine gewichtsmittlere Molekülmasse von zwischen 500.000 und 5.000.000 Da aufweist; wobei das Verfahren die folgenden Schritte umfasst:

    1) gleichmäßiges Mahlen eines Kautschuks und eines Hochtemperatur-Kompatibilisierungsmittels bei 90 bis 120 °C, um einen Schmelzklebstoff A zu erhalten, wobei:

    der Kautschuk Polyisobutylen (PIB), Ethylen-Propylen-Methylen-Copolymer (EPM) oder eine Mischung davon ist und eine dynamische Viskosität von zwischen 50 und 20.000 Pa s bei 100 °C und eine gewichtsmittlere Molekülmasse von zwischen 90.000 und 250.000 Da aufweist, und
    das Hochtemperatur-Kompatibilisierungsmittel ein aliphatischer zweibasiger Säureester ist, der einen Flammpunkt von mehr als 210 °C aufweist und ausgewählt ist aus Dioctylsebacat (DOS), Dioctylazelat (DOZ), Diisodecyladipat (DIDA) oder einer Mischung davon;

    2) Quellen und Rühren von Polyethylen und dem Hochtemperatur-Kompatibilisierungsmittel bei 90 bis 120 °C für 1 bis 24 Stunden, um eine Aufschlämmung B zu erhalten;
    3) gleichmäßiges Mischen des Schmelzklebstoffs A und der Aufschlämmung B bei 90 bis 120 °C, quantitatives Einspeisen einer resultierenden Mischung in einen Doppelschneckenextruder über eine Dosierpumpe, Mahlen bei 180 bis 210 °C zu einer thermodynamisch einheitlichen Lösung und Extrudieren der einheitlichen Lösung, um Gussstücke zu erhalten;
    4) schnelles Abkühlen der Gussstücke auf Kühlwalzen unter Verwendung eines asymmetrischen Kühlverfahrens, Steuern einer Wickellänge einer Oberfläche der Gussstücke auf einer sekundären Kühlwalze, die kleiner als die der anderen Oberfläche der Gussstücke auf einer Hauptkühlwalze ist, oder Steuern von Temperaturen und Durchflussraten eines Kühlmediums in der Haupt- und der sekundären Kühlwalze, die unterschiedlich sind;
    5) Vorwärmen der gekühlten Gussstücke auf 105 bis 128 °C und thermisches Strecken der Gussstücke in zwei Richtungen zur Bildung einer Membran, wobei ein Längsdehnungsverhältnis 4- bis 7-fach beträgt und ein Querdehnungsverhältnis 2- bis 6-fach beträgt;
    6) Extrahieren und Entfernen des Hochtemperatur-Kompatibilisierungsmittels unter Verwendung eines zweiten Lösungsmittels; und
    7) thermisches Strecken der Membran zur Einstellung von Porosität, Porengröße und Dicke davon, thermisches Formen und Abkühlen, um die mikroporöse Membran aus einem polyethylenbasierten Verbundwerkstoff zu erhalten.

7. Lithium-Ionen-Batterie, umfassend ein positives Polstück, ein negatives Polstück, einen Elektrolyten und eine mikroporöse Membran aus einem polyethylenbasierten Verbundwerkstoff nach einem der Ansprüche 1 bis 6, **dadurch gekennzeichnet, dass** die mikroporöse Membran eingerichtet ist, mit dem positiven Polstück und dem negativen Polstück bei einer Temperatur von zwischen 110 und 120 °C und einem Druck von zwischen 1 und 2,5 MPa für zwischen 1 und 15 min heißgepresst zu werden, um einen Verbindungskörper mit einer Schälfestigkeit von mehr als 0,03 N/20 mm und einer Wärmeschrumpfrate von weniger als 10 % bei 130 °C innerhalb von 30 min zu bilden.

**Revendications**

1. Membrane microporeuse en matériau composite à base de polyéthylène, comprenant un polyéthylène haute densité cristallin en tant que matériau de base, **caractérisé en ce que** le polyéthylène a une chaleur de fusion latente comprise entre 200 et 250 J/g, et un poids moléculaire moyen en poids compris entre 500 000 et 5 000 000 Da ; le polyéthylène est modifié par 10 à 25 % en poids d'un agent de modification comprenant un caoutchouc sélectionné parmi le polyisobutylène (PIB), un copolymère d'éthylène-propylène méthylène (EPM), ou un mélange de ceux-ci, le caoutchouc ayant une viscosité dynamique comprise entre 50 et 2 000 Pa.s à 100 °C et un poids moléculaire moyen en poids compris entre 90 000 et 250 000 Da ; les micropores sur deux côtés opposés de la membrane sont asymétriques, les micropores sur un côté sont d'une taille inférieure à celle des micropores sur l'autre côté ; la membrane microporeuse a une chaleur de fusion latente comprise entre 150 et 195 J/g, un point de fusion compris entre 133 et 145 °C, une dimension des pores moyenne comprise entre 80 et 300 nm, une porosité comprise entre 40 et 75 %, une valeur Gurley initiale comprise entre 30 s/100 cm$^3$ et 400 s/100 cm$^3$, une épaisseur comprise entre 20 et 50 $\mu$m, une résistance en traction longitudinale excédant 70 MPa, et un allongement transversal à la rupture excédant 100 %.

2. Membrane microporeuse selon la revendication 1, **caractérisée en ce que** le caoutchouc est le polyisobutylène (PIB) ayant une viscosité dynamique comprise entre 150 et 1000 Pa.s à 100 °C et un poids moléculaire moyen en poids compris entre 120 000 et 200 000 Da.

3. Membrane microporeuse selon la revendication 1, **caractérisée en ce que** le caoutchouc est un copolymère d'éthylène-propylène méthylène (EPM) ayant une viscosité dynamique comprise entre 120 et 900 Pa.s à 100 °C et un poids moléculaire moyen en poids compris entre 120 000 et 200 000 Da.

4. Membrane microporeuse selon la revendication 1, **caractérisée en ce que** le polyéthylène a un poids moléculaire moyen en poids compris entre 1 000 000 et 3 000 000 Da.

5. Membrane microporeuse selon la revendication 1, **caractérisée en ce que** la membrane a une épaisseur comprise entre 25 et 35 $\mu$m, et une porosité comprise entre 50 et 65 %.

6. Procédé de préparation d'une membrane microporeuse en un matériau composite à base de polyéthylène en utilisant une technologie de séparation de phase thermiquement induite, la membrane comprenant un polyéthylène haute densité cristallin en tant que matériau de base, le polyéthylène a une chaleur de fusion latente comprise entre 200 et 250 J/g, et un poids moléculaire moyen en poids compris entre 500 000 et 5 000 000 Da ; dans lequel le procédé comprend les étapes suivantes :

   1) le broyage uniforme d'un caoutchouc et d'un agent de compatibilité haute température à 90 à 120 °C pour donner un adhésif thermofusible A, dans lequel :

   le caoutchouc est le polyisobutylène (PIB), un copolymère d'éthylène-propylène méthylène (EPM), ou un mélange de ceux-ci, et a une viscosité dynamique comprise entre 50 et 20 000 Pa.s à 100 °C et un poids moléculaire moyen en poids compris entre 90 000 et 250 000 Da, et
   l'agent de compatibilité haute température est un ester d'acide aliphatique dibasique ayant un point d'éclair excédant 210 °C, et est sélectionné parmi le sébacate de dioctyle (DOS), l'azélate de dioctyle (DOZ), l'adipate de diisodécyle (DIDA), ou un mélange de ceux-ci ;

   2) le gonflement et l'agitation du polyéthylène et de l'agent de compatibilité haute température à 90 à 120 °C pendant 1 à 24 heures pour obtenir une suspension B ;
   3) le mélange uniforme de l'adhésif thermofusible A et de la suspension B à 90 à 120 °C, l'alimentation quantitative d'un mélange obtenu à une extrudeuse à double vis via une pompe volumétrique, le broyage à 180 à 210 °C pour obtenir une solution thermodynamiquement uniforme, et l'extrusion de la solution uniforme pour donner des pièces coulées ;
   4) le refroidissement rapide des pièces coulées sur des rouleaux refroidisseurs en utilisant un processus de refroidissement asymétrique, en régulant une longueur d'enroulement d'une surface des pièces coulées sur un rouleau refroidisseur secondaire pour qu'elle soit inférieure à celle de l'autre surface des pièces coulées sur un rouleau refroidisseur principal, ou en régulant les températures et les débits d'un milieu de refroidissement dans les rouleaux refroidisseurs principal et secondaire pour qu'elles soient différentes ;
   5) le préchauffage des pièces coulées à 105 à 128 °C et l'étirage thermique des pièces coulées dans deux directions pour former une membrane, un rapport d'étirage longitudinal étant de 4 à 7 fois, et un rapport d'étirage transversal étant de 2 à 6 fois ;

6) l'extraction et le retrait de l'agent de compatibilité haute température en utilisant un second solvant ; et

7) l'étirage thermique de la membrane pour l'ajustement de sa porosité, de sa dimension des pores, et de son épaisseur, la mise en forme thermique, et le refroidissement pour obtenir la membrane microporeuse d'un matériau composite à base de polyéthylène.

**7.** Batterie ion-lithium, comprenant une pièce pôle positif, une pièce pôle négatif, un électrolyte, et une membrane microporeuse en un matériau composite à base de polyéthylène selon l'une quelconque des revendications 1 à 6, **caractérisée en ce que,** la membrane microporeuse est adaptée à être pressée à chaud avec la pièce pôle positif et la pièce pôle négatif à une température comprise entre 110 et 120 °C et une pression comprise entre 1 et 2,5 MPa pendant 1 à 15 minutes pour former un corps de liaison ayant une résistance au pelage supérieure à 0,03 N/20 mm et un taux de contraction thermique inférieur à 10 % à 130 °C en 30 minutes.

4d 10.0kV 7.9mm x5.00k SE(M) 11/22/2011 10:57          10.0um

**FIG. 1**

EP 2 796 187 B1

FIG. 2

14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 02152444
- CN 1978037 A
- US 2010166961 A1
- US 4778601 A
- US 4197148 A
- CN 200480034190
- CN 01112218